# EUROPEAN PATENT APPLICATION

(11) **EP 3 933 747 A1**
(43) Date of publication of application: **05.01.2022**
(21) Application number: 19922326.4
(22) Date of filing: 29.03.2019
(51) Int. Cl.: G06Q 50/10, H04L 9/32

(54) **INFORMATION PROCESSING PROGRAM, DEVICE, AND METHOD**

(71) Applicant: FUJITSU LIMITED, Kanagawa 211-8588 (JP)
(72) Inventor: NAGAI, Koichi, Kawasaki-shi, Kanagawa 211-8588 (JP); SHIMADA, Masahiro, Kawasaki-shi, Kanagawa 211-8588 (JP)
(74) Representative: Hoffmann Eitle
(86) International application number: PCT/JP2019/014209
(87) International publication number: WO 2020/202326

(57) **Abstract**

An object is to allow an issuing party that issued certificate data to acquire information regarding a receiving party to whom the issued certificate data has been submitted. When the issuing party issues a certificate to a user, digitalized certificate data is transmitted from an issuing party terminal (32) to a user terminal (34), and the issuing party terminal (32) also transmits a registration request. An information processing platform (38) registers processing information relating to the certificate data in a blockchain. When a receiving party terminal (36) of a receiving party to whom the user has submitted the certificate data transmits an inquiry request for an authenticity check of the certificate data, the information processing platform (38) stores in the blockchain an inquiry result of the executed authenticity check and information regarding the receiving party. The information processing platform (38) also returns the inquiry result to the receiving party, and notifies the issuing party that an inquiry has been made. The issuing party references stored processing information in order to acquire the information regarding the receiving party to whom the certificate data has been submitted, as well as to acquire the inquiry result of the authenticity check.

## Description

### FIELD

Technology disclosed herein relates to an information processing program, an information processing device, and an information processing method.

### BACKGROUND

A system has hitherto been proposed to provide online certification for qualification information that a publisher has published over a network. This system is connected to a second network that is different from a first network, and via an interface, receives a certification request from a qualification information publication server requesting certification for qualification information. A declaration identifier for the qualification information subject to the certification request is acquired by accessing a qualification information database. In order to certify the qualification information subject to the certification request, an interrogation is performed via a certification server as to whether or not a combination of a qualification holder identifier and a certificate identifier corresponding to a combination of a publisher identifier and the declaration identifier are being held in a certificate database.

A system has also been proposed for achieving efficient user authentication while also eliminating the effort of a user inputting information manually, going to a service counter, or sending documentation by mail. In this system, in a case in which a terminal transmits stored identification document data to a relay server, and a data verification server deems this identification document data to be genuine, the verified identification document data is written to a tamper-proof device. When the user receives a service from a business, a business server requests transmission of attribute information regarding the user identification document data from the terminal, and the terminal transmits this identification document data to the relay server. In a case in which the data verification server has deemed the identification document data to be genuine, the terminal transmits the attribute information regarding the verified user identification document data to the business server, and the business server transmits notification of registration completion to the terminal.

### Related Patent Documents

Patent Document 1: Japanese Patent Application Laid-Open (JP-A) No. 2010-278982
Patent Document 2: JP-ANo. 2012-181800

### SUMMARY OF INVENTION

### Technical Problem

Mechanisms exist by which institutions such as businesses and schools that receive submitted written documents such as certificates are able to check the authenticity of such written documents. However, there is no mechanism in place for an issuing party who issued a written document to ascertain subsequent usage of the issued written document, and so the issuing party is unable to carry out efficient and effective marketing activity.

An object of one aspect of technology disclosed herein is to enable an issuing party that issued a written document to acquire information regarding a receiving party to whom the issued written document has been submitted.

According to an aspect of the embodiments, a non-transitory recording medium storing an information processing program executable by a computer to perform a process, the process comprising: executing an authenticity check of written document data in a case in which a request for an authenticity check of the written document data has been received from a requesting party; transmitting an inquiry result from the authenticity check to the requesting party; storing information regarding the requesting party and identification information for the written document data in association with each other in a first storage section, in response to either the authenticity check request from the requesting party or transmission of the authenticity check inquiry result to the requesting party; and notifying an issuing party of the written document data, as pre-stored in a second storage section, of information regarding the requesting party associated with the written document data identification information.

### Solution to Problem

As one aspect of technology disclosed herein, an authenticity check of written document data is executed in a case in which a request for an authenticity check of the written document data has been received from a requesting party, and an inquiry result of the authenticity check is transmitted to the requesting party. Moreover, in the technology disclosed herein, information regarding the requesting party and identification information for the written document data are stored in association with each other in a first storage section in response to either the authenticity check request from the requesting party or transmission of the authenticity check inquiry result from the requesting party. Then, in the technology disclosed herein, an issuing party of the written document data, as pre-stored in a second storage section is notified of information regarding the requesting party associated with the written document data identification information.

### Advantageous Effects of Invention

This aspect exhibits the advantageous effect of enabling an issuing party that issued a written document to acquire information regarding a receiving party to whom the issued written document has been submitted.

### BRIEF DESCRIPTION OF DRAWINGS

Fig. 1 is a block diagram illustrating a schematic configuration of an information processing system according to an exemplary embodiment.
Fig. 2 is a diagram for outlining a service provided by an information processing system according to an exemplary embodiment.
Fig. 3 is a functional block diagram of an information processing device.
Fig. 4 is a diagram illustrating an example of a processing information database (DB).
Fig. 5 is a diagram illustrating an example of an institution information DB.
Fig. 6 is a block diagram illustrating a schematic configuration of a computer that functions as an information processing device according to an exemplary embodiment.
Fig. 7 is a flowchart illustrating an example of registration processing.
Fig. 8 is a flowchart illustrating an example of inquiry processing.
Fig. 9 is a flowchart illustrating an example of reference processing.

### DESCRIPTION OF EMBODIMENTS

Explanation follows regarding an example of an exemplary embodiment according to the technology disclosed herein, with reference to the drawings.

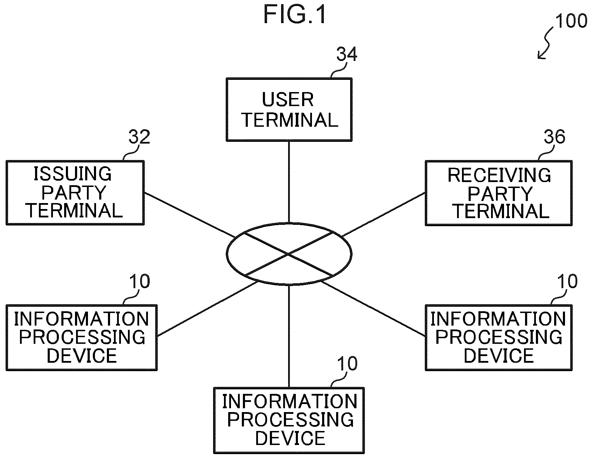

As illustrated in Fig. 1, an information processing system 100 according to the present exemplary embodiment is configured including plural information processing devices 10, plural issuing party terminals 32, plural user terminals 34, and plural receiving party terminals 36. Note that only one each of the issuing party terminals 32, the user terminals 34, and the receiving party terminals 36 are illustrated in Fig. 1. The issuing party terminals 32, the user terminals 34, the receiving party terminals 36, and the information processing devices 10 are respectively connected to one another over a network.

Each of the issuing party terminals 32 is an information processing terminal used by a certificate issuing party. In the present exemplary embodiment, explanation follows regarding a case in which the issuing party is an educational institution such as a language school, a vocational college, or an organization that certifies and administers qualifications.

Each of the user terminals 34 is an information processing terminal used by a user to whom a certificate has been issued. In the present exemplary embodiment, the user is, as an example, a student attending an educational institution.

Each of the receiving party terminals 36 is an information processing terminal used by a receiving party to whom a user submits their certificate. In the present exemplary embodiment, the receiving party may for example be an educational institution which the user desires to attend, or a company which the user desires to work for.

Although the issuing party terminals 32, the user terminals 34, and the receiving party terminals 36 are allocated different names and are distinguished for ease of explanation, each of these terminals may be implemented by a personal computer, a tablet, a smartphone, or the like.

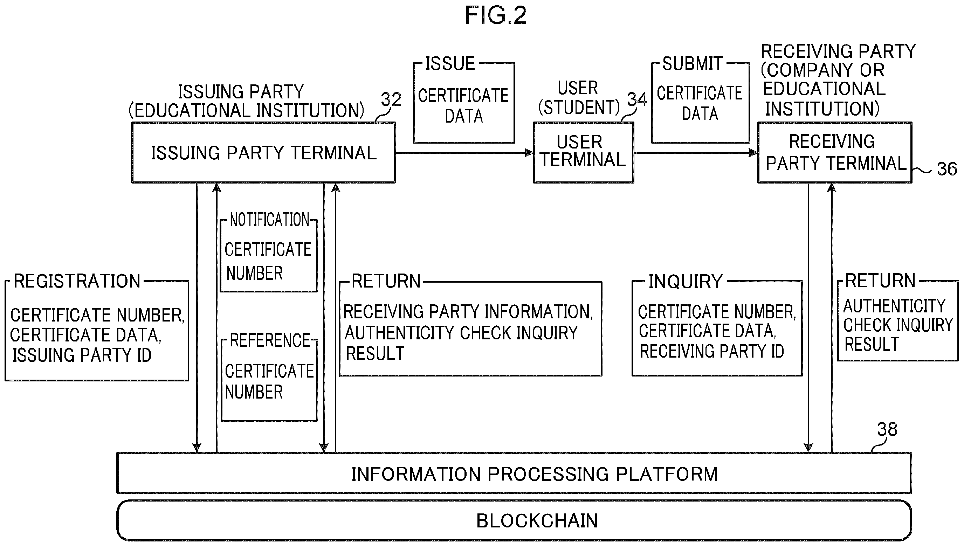

As illustrated in Fig. 2, the plural information processing devices 10 function as respective nodes of an information processing platform 38, this being a platform for a service provided by the information processing system 100 according to the present exemplary embodiment. This platform uses a blockchain.

Explanation follows to outline the service provided by the information processing system 100 according to the present exemplary embodiment, with reference to Fig. 2.

When an issuing party issues a certificate to a relevant user, the certificate is converted to electronic data in a format such as portable document format (PDF), and the certificate data is transmitted from the corresponding issuing party terminal 32 to the corresponding user terminal 34. When this is performed, the issuing party terminal 32 transmits a registration request to the information processing platform 38. The registration request includes a certificate number configuring unique certificate data identification information, the certificate data, and an issuing party ID configuring issuing party identification information. The information processing platform 38 then registers processing information (described in detail later) relating to the certificate data in the blockchain. The user submits the issued certificate data to a receiving party.

In order to check the authenticity of this certificate data, the receiving party transmits an inquiry request from the corresponding receiving party terminal 36 to the information processing platform 38. The inquiry request includes the certificate data, the certificate number of the certificate data, and a receiving party ID, this being identification information for the receiving party. The information processing platform 38 checks the authenticity of the certificate data, stores in the blockchain information regarding the receiving party who made the inquiry request and an inquiry result of performing the authenticity check, and returns the inquiry result to the receiving party. When an inquiry has been received or when an inquiry result has been returned, the information processing platform 38 also notifies the issuing party who issued the target certificate data of this fact.

On receiving this notification, the issuing party transmits a reference request including the certificate number from the corresponding issuing party terminal 32 to the information processing platform 38. In response to this reference request, the information processing platform 38 transmits information regarding the receiving party to whom the certificate data has been submitted and the authenticity check inquiry result to the corresponding issuing party terminal 32.

Detailed explanation follows regarding functional configuration of the information processing devices 10 configuring the blockchain functionality of the information processing platform 38. Note that since each of the plural information processing devices 10 has a similar configuration, explanation follows regarding a single information processing device 10.

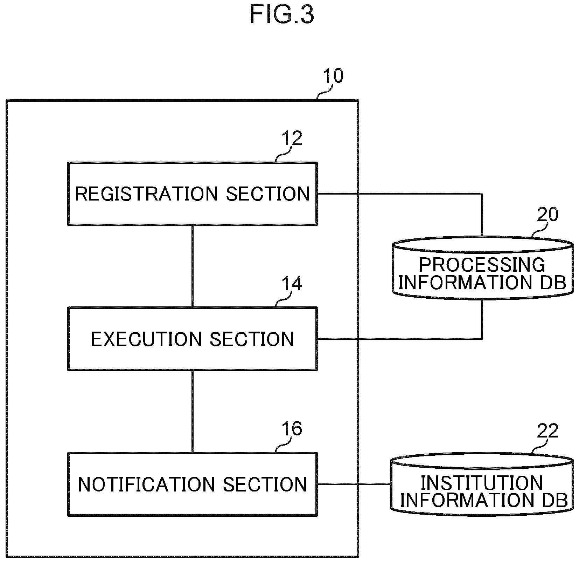

As illustrated in Fig. 3, in terms of functionality, the information processing device 10 includes a registration section 12, an execution section 14, and a notification section 16. A predetermined storage region of each of the plural information processing devices 10 configuring the blockchain functions as a blockchain database in which a processing information database (DB) 20 and an institution information DB 22 are stored.

The registration section 12 receives a registration request including a certificate number, certificate data, and issuing party ID transmitted from an issuing party terminal 32. The registration section 12 calculates a hash value based on the certificate data included in the received registration request, and stores the certificate number and issuing party ID included in the received registration request together with a processing type (described in detail later) and a processing date and time in the processing information DB 20 as processing information.

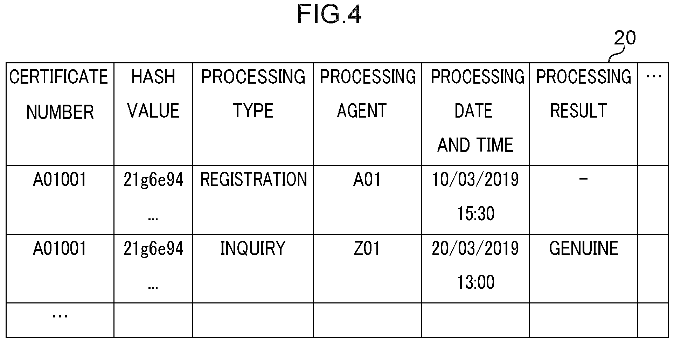

Fig. 4 illustrates an example of the processing information DB 20. In the example in Fig. 4, each row (each record) corresponds to a single processing information field. The respective processing information includes fields such as "certificate number", "hash value", "processing type", "processing agent", "processing date and time", and "processing result".

The processing type is information indicating the type of processing performed on the certificate data. For example, when storing information relating to the certificate data in the processing information DB 20, the registration section 12 stores "registration" as the processing type of the processing information. When executing a certificate data authenticity check, the execution section 14, described later, stores "inquiry" as the processing type of the processing information. Other processing types, such as "deletion" and "reference", may be set in addition to "registration" and "inquiry".

The "processing agent" is information specifying the institution that requested the processing indicated by the "processing type" for the information relating to the certificate data. For example, when storing information relating to the certificate data in the processing information DB 20, the issuing party ID included in the registration request received by the registration section 12 is stored as the "processing agent" in the processing information stored by the registration section 12. When executing a certificate data authenticity check, the receiving party ID included in the inquiry request received by the execution section 14 is stored as the "processing agent" in the processing information stored by the execution section 14, described later.

The "processing result" is a result of processing executed according to the indicated "processing type". For example, when a certificate data authenticity check has been executed, the inquiry result of this authenticity check is stored as the processing result.

The fields included in the processing information stored in the processing information DB 20 are not limited to the fields described above. Contents of the certificate data, such as information regarding a course of study completed and results of qualification examinations relating to the certificate data may also be included.

The execution section 14 receives an inquiry request including certificate data, a certificate number, and a receiving party ID transmitted from a receiving party terminal 36. The execution section 14 calculates a hash value for the certificate data included in the received inquiry request. The execution section 14 then executes an authenticity check on the certificate data subject to the inquiry request by comparing the certificate number included in the received inquiry request and the calculated hash value against certificate numbers and hash values stored in the processing information DB 20.

Specifically, in a case in which a certificate number and a hash value that match the certificate number included in the received inquiry request and the calculated hash value are stored in the processing information DB 20, the inquiry result of the authenticity check executed by the execution section 14 is "genuine". In a case in which a matching certificate number is present in the processing information DB 20 but the associated stored hash value does not match, the inquiry result of the authenticity check executed by the execution section 14 is "counterfeit (no hash value match)". In a case in which neither a matching certificate number nor a matching hash value are stored in the processing information DB 20, the inquiry result of the authenticity check executed by the execution section 14 is "counterfeit (no match)". In irregular cases, such as a case in which a matching hash value is present in the processing information DB 20 but the associated stored certificate number does not match, the inquiry result of the authenticity check executed by the execution section 14 is "other".

Classifying the authenticity check inquiry results in the above manner enables a greater amount of information to be obtained than in a case in which the inquiry result is simply "genuine" or "counterfeit". For example, in a case in which the inquiry result is "counterfeit (no hash value match)", it may be surmised that legitimate certificate data has been tampered with. In a case in which the inquiry result is "counterfeit (no match)", it may be surmised that the certificate data itself has been fabricated.

The execution section 14 stores the certificate number and receiving party ID included in the inquiry request received from the corresponding receiving party terminal 36, the calculated hash value, the authenticity check inquiry result, the processing type of "inquiry", and the processing date and time in the processing information DB 20 as processing information. The execution section 14 also returns the authenticity check inquiry result to the receiving party terminal 36 that transmitted the inquiry request.

When processing information for the processing type of "inquiry" is stored in the processing information DB 20, the notification section 16 notifies the issuing party that issued the certificate data indicated by the "certificate number" in the processing information of the fact that an inquiry has been made.

Specifically, the notification section 16 acquires the "certificate number" from the processing information that has been stored in the processing information DB 20 under the processing type of "inquiry", namely the certificate number of the certificate data for which the authenticity check has been performed. The notification section 16 then refers to the institution information DB 22 that is stored with information relating to the institutions utilizing the service provided by the information processing system 100 in order to acquire an address of the issuing party corresponding to the acquired certificate number.

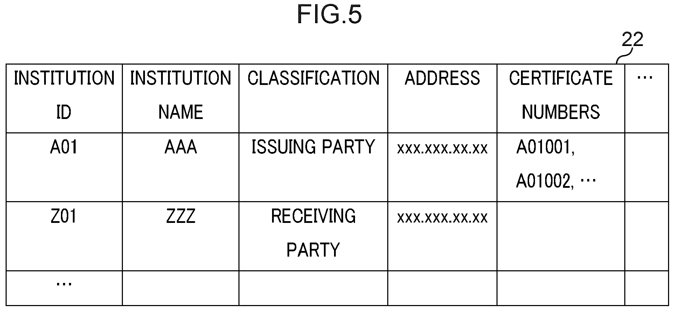

Fig. 5 illustrates an example of the institution information DB 22. In the example in Fig. 5, for each institution, information such as an "institution ID" indicating an issuing party ID or receiving party ID, an "institution name" corresponding to the name of the institution indicated by the institution ID, a "classification", an "address", and "certificate numbers" are stored associated with each other. The "classification" is information indicating whether the institution is an issuing party or a receiving party. The "address" is for example an IP address of the corresponding issuing party terminal 32 or receiving party terminal 36, or an email address used by the corresponding issuing party terminal 32 or receiving party terminal 36.

The notification section 16 transmits the certificate number of the certificate data on which the authenticity check has been performed to the acquired address of the corresponding issuing party terminal 32 in order to notify the issuing party of the fact that an inquiry has been made regarding certificate data issued by this issuing party.

In a case in which the notification section 16 receives a reference request, including the certificate number, transmitted from the corresponding issuing party terminal 32 in response to this notification, the notification section 16 acquires the processing information including the certificate number included in the received reference request and the processing type of "inquiry" from the processing information DB 20, and transmits this processing information to the corresponding issuing party terminal 32. The issuing party is thereby able to acquire information regarding the receiving party to whom the certificate data issued by the issuing party has been submitted. A check as to whether or not the certificate data has been tampered with or fabricated can also be performed based on the authenticity check inquiry result.

The notification section 16 may also acquire the institution name corresponding to the receiving party ID included in the processing information from the institution information DB 22 as information regarding the receiving party, and transmit this institution name together with the other processing information. The notification section 16 may also transmit the relevant processing information itself to the corresponding issuing party terminal 32 by way of notification that an inquiry has been made. In such cases, there is no need for a reference request to be made from the issuing party terminal 32.

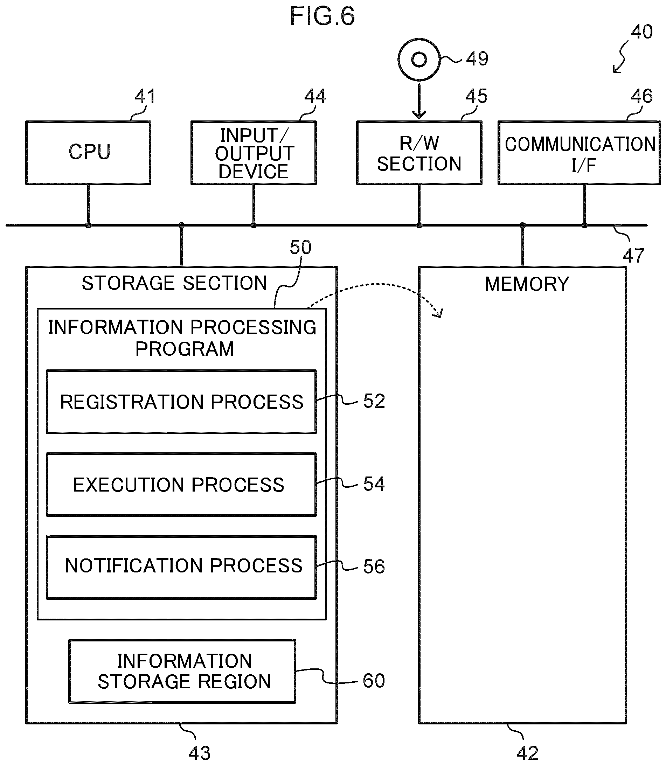

The information processing device 10 may for example be implemented by a computer 40 such as that illustrated in Fig. 6. The computer 40 includes a central processing unit (CPU) 41, memory 42 serving as a temporary storage region, and a non-volatile storage section 43. The computer 40 also includes an input/output device 44 such as an input section and a display section, and a read/write (R/W) section 45 that controls reading and writing of data with respect to a storage medium 49. The computer 40 also includes a communication interface (I/F) 46 connected to a network such as the internet. The CPU 41, the memory 42, the storage section 43, the input/output device 44, the R/W section 45, and the communication I/F 46 are connected to each other through a bus 47.

The storage section 43 may be implemented by a hard disk drive (HDD), a solid state drive (SSD), flash memory, or the like. The storage section 43 serves as a storage medium stored with an information processing program 50 that causes the computer 40 to function as the information processing device 10. The information processing program 50 includes a registration process 52, an execution process 54, and a notification process 56. The storage section 43 also includes an information storage region 60 stored with information respectively configuring the processing information DB 20 and the institution information DB 22.

The CPU 41 reads the information processing program 50 from the storage section 43, expands the information processing program 50 in the memory 42, and sequentially executes the processes included in the information processing program 50. By executing the registration process 52, the CPU 41 acts as the registration section 12 illustrated in Fig. 3. By executing the execution process 54, the CPU 41 acts as the execution section 14 illustrated in Fig. 3. By executing the notification process 56, the CPU 41 acts as the notification section 16 illustrated in Fig. 3. The CPU 41 also reads information from the information storage region 60 and expands both the processing information DB 20 and the institution information DB 22 in the memory 42. The computer 40 executing the information processing program 50 thereby functions as the information processing device 10. Note that the CPU 41 that executes this program corresponds to hardware.

Note that the functionality implemented by the information processing program 50 may be implemented by a semiconductor integrated circuit, more specifically, an application specific integrated circuit (ASIC) or the like.

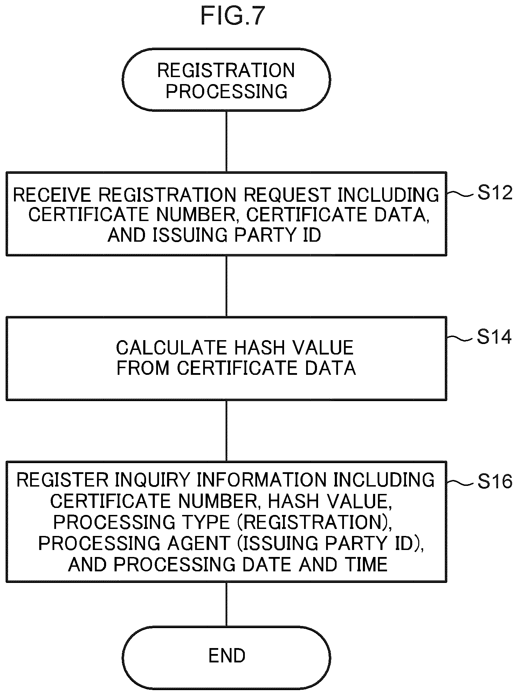

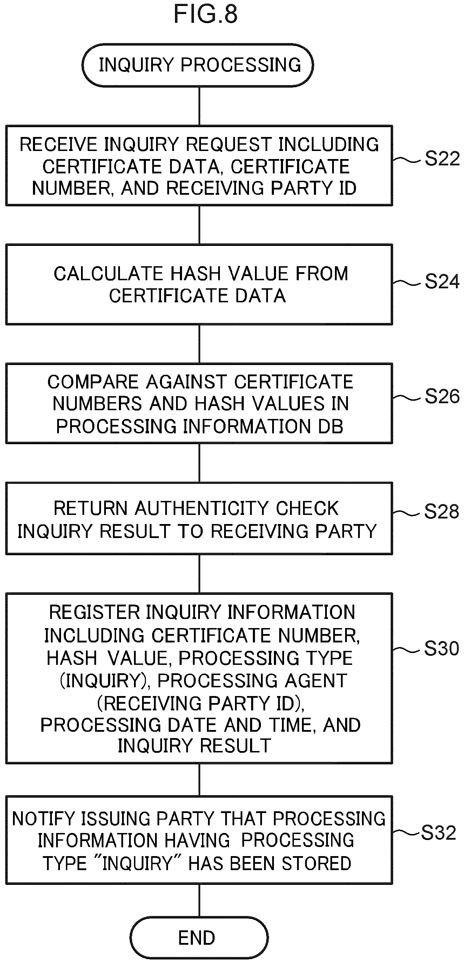

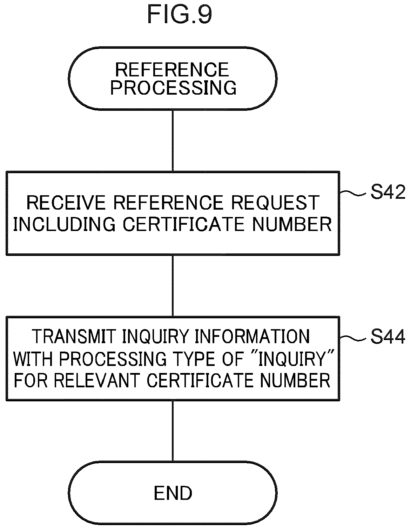

Next, explanation follows regarding operation of the information processing device 10 according to the present exemplary embodiment. When a registration request has been transmitted from an issuing party terminal 32, the information processing device 10 executes the registration processing illustrated in Fig. 7. When an inquiry request has been transmitted from a receiving party terminal 36, the information processing device 10 executes the inquiry processing illustrated in Fig. 8. When a reference request has been transmitted from an issuing party terminal 32, the information processing device 10 executes the reference processing illustrated in Fig. 9. Note that the registration processing, the inquiry processing, and the reference processing are an example of an information processing method of technology disclosed herein.

First, explanation follows regarding the registration processing illustrated in Fig. 7.

At step S12, the registration section 12 receives a registration request including a certificate number, certificate data, and an issuing party ID transmitted from an issuing party terminal 32.

Next, at step S14, the registration section 12 calculates a hash value from the certificate data included in the registration request received at step S12.

Next, at step S16, the registration section 12 stores the certificate number and issuing party ID ("processing agent") included in the received registration request, the hash value calculated at step S14, the processing type of "registration", and the processing date and time in the processing information DB 20 as processing information. The registration processing is then ended.

Next, explanation follows regarding the inquiry processing illustrated in Fig. 8.

At step S22, the execution section 14 receives an inquiry request including certificate data, a certificate number, and a receiving party ID transmitted from a receiving party terminal 36.

Next, at step S24, the execution section 14 calculates a hash value from the certificate data included in the inquiry request received at step S22.

Next, at step S26, the execution section 14 compares the certificate number included in the received inquiry request and the calculated hash value against the certificate numbers and the hash values stored in the processing information DB 20. The execution section 14 determines whether the authenticity check inquiry result is "genuine", "counterfeit (no hash value match)", "counterfeit (no match)", or "other" based on whether or not matches are found for the certificate number and the hash value.

Next, at step S28, the execution section 14 returns the authenticity check inquiry result determined at step S26 to the receiving party terminal 36 that transmitted the inquiry request.

At step S30, the execution section 14 stores the certificate number and receiving party ID ("processing agent") included in the inquiry request, the calculated hash value, the determined authenticity check inquiry result ("processing result"), the processing type of "inquiry", and the processing date and time in the processing information DB 20 as processing information.

Next, at step S32, the fact that processing information for the processing type of "inquiry" has been stored in the processing information DB 20, namely the fact that an authenticity check inquiry has been made with respect to the certificate data, is notified to the issuing party who issued the certificate data indicated by the "certificate number" in this processing information. The inquiry processing is then ended.

Next, explanation follows regarding the reference processing illustrated in Fig. 9.

At step S42, the notification section 16 receives a reference request including a certificate number transmitted from an issuing party terminal 32.

Next, at step S44, the notification section 16 acquires processing information including the certificate number included in the reference request received at step S42 and the processing type of "inquiry" from the processing information DB 20, and transmits this processing information to the corresponding issuing party terminal 32. The reference processing is then ended.

As described above, in the information processing system according to the present exemplary embodiment, in a case in which an inquiry request has been made by the receiving party of certificate data in order to perform an authenticity check on the certificate data, or in a case in which an inquiry result has been returned to the receiving party, the information processing device notifies the issuing party of the certificate data of this fact. Information regarding the receiving party and the inquiry result is then transmitted to the issuing party. This enables the issuing party that issued the certificate data to acquire information regarding the receiving party of the issued certificate data. A check as to whether or not the certificate data has been tampered with or fabricated can also be performed based on the authenticity check inquiry result.

For example, in a case in which the issuing party is an examining body, knowing the identity of the receiving party of the certificate data enables efficient and effective marketing aimed at increasing the number of examinees. Moreover, in a case in which fabricated certificate data is being employed in falsifying accreditation or pass certification, this might damage the credibility or brand of the examination. In the present exemplary embodiment, the issuing party is able to ascertain whether or not tampering or fabrication of certificate data has occurred, thereby enabling the issuing party to adopt early measures, such as by issuing a warning on the internet or directly to the receiving party institution. Other potential measures include updating the design of the certificate data, or embedding a digital watermark in order to make tampering and fabrication more difficult.

The information processing platform used to provide the service of the information processing system according to the present exemplary embodiment is implemented using a blockchain. This enables tampering of registered hash values to be prevented, and loss of information stored in the processing information DB to be prevented, thereby enabling confidence in the system to be secured.

In the above exemplary embodiment, a case has been described in which the issuing party is notified of a case in which processing information for the processing type of "inquiry" and including the authenticity check inquiry result for the certificate data has been stored in the processing information DB. However, there is no limitation thereto. Configuration may be made such that processing information indicating the fact that an inquiry request has been made is stored in the processing information DB, and the issuing party is notified of this fact at the point in time when the inquiry request is received from the receiving party.

Moreover, although certificate data issued by an educational institution serves as an example of written document data in the above exemplary embodiment, there is no limitation thereto. For example, the written document data may be another type of certification such as identification papers, or another form of digitalized written document data such as receipts or various paperwork. Moreover, the issuing party is not limited to an educational institution, and may be a governing body, a financial institution, or the like.

Although a case in which the certificate data authenticity check is executed using a combination of the certificate number and the hash value has been described in the above exemplary embodiment, there is no limitation thereto. Comparison may be performed so as to ascertain whether or not a hash value matching a hash value included in the inquiry request is present in the processing information DB. Alternatively, comparison may be performed for user identification information issued with the certificate data in addition to the certificate number and the hash value.

Moreover, in the above exemplary embodiment, configuration may be made such that a user is able to perform an authenticity check inquiry for the certificate data they have been issued with and to reference the authenticity check inquiry result using their user terminal 34.

Although a case in which a blockchain is employed has been described in the above exemplary embodiment, a centralized system or another form of decentralized system may be employed instead.

Although the information processing program described in the above exemplary embodiment is in a format pre-stored (installed) in the storage section, there is no limitation thereto. The program according to technology disclosed herein may be provided in a format stored on a storage medium such as CD-ROM, DVD-ROM, or USB memory.

The following supplements are further disclosed in relation to the above exemplary embodiment.

### Explanation of Reference Numerals

- 10: information processing device
- 12: registration section
- 14: execution section
- 16: notification section
- 20: processing information DB
- 22: institution information DB
- 32: issuing party terminal
- 34: user terminal
- 36: receiving party terminal
- 38: information processing platform
- 40: computer
- 41: CPU
- 42: memory
- 43: storage section
- 44: input/output device
- 49: storage medium
- 50: information processing program
- 100: information processing system

## Claims

1. An information processing program executable by a computer to perform processing, the processing comprising:
executing an authenticity check of written document data in a case in which a request for an authenticity check of the written document data has been received from a requesting party;
transmitting an inquiry result from the authenticity check to the requesting party;
storing information regarding the requesting party and identification information for the written document data in association with each other in a first storage section, in response to either the authenticity check request from the requesting party or transmission of the authenticity check inquiry result to the requesting party; and
notifying an issuing party of the written document data, as pre-stored in a second storage section, of information regarding the requesting party associated with the written document data identification information.

2. The information processing program of claim 1, wherein, in a case in which the issuing party has issued the written document data, a hash value calculated from the written document data and the written document data identification information are stored in association with each other in the first storage section.

3. The information processing program of claim 2, wherein the written document data is received as the authenticity check request, and the authenticity check is executed by comparing a hash value calculated from the written document data against the hash value stored in the first storage section.

4. The information processing program of claim 2, wherein the written document data and the written document data identification information are received as the authenticity check request, and the authenticity check is executed by comparing a hash value calculated from the written document data against the hash value stored in the first storage section and by comparing the received written document data identification information against the written document data identification information stored in the first storage section.

5. The information processing program of claim 4, wherein the received hash value and the received written document data identification information are compared against the hash value and the written document data identification information that have been stored in the first storage section, and the authenticity check inquiry result transmitted to the requesting party is a result selected from the group consisting of both the hash values and the written document data identification information matching, only the written document data identification information matching, only the hash values matching, and neither the hash values nor the written document data identification information matching.

6. The information processing program of any one of claim 1 to claim 5, wherein:
the first storage section and the second storage section are each configured by a blockchain database; and
the computer configures a blockchain together with a plurality of other computers connected over a network.

7. An information processing device, comprising:
an execution section configured to execute an authenticity check of written document data in a case in which a request for an authenticity check of the written document data has been received from a requesting party, transmit an inquiry result from the authenticity check to the requesting party, and store information regarding the requesting party and identification information for the written document data in association with each other in a first storage section, in response to either the authenticity check request from the requesting party or transmission of the authenticity check inquiry result to the requesting party; and
a notification section configured to notify an issuing party of the written document data, as pre-stored in a second storage section, of information regarding the requesting party associated with the written document data identification information.

8. The information processing device of claim 7, further comprising a registration section configured to store a hash value calculated from the written document data and the written document data identification information in association with each other in the first storage section in a case in which the issuing party has issued the written document data.

9. The information processing device of claim 8, wherein the execution section receives the written document data as the authenticity check request, and executes the authenticity check by comparing a hash value calculated from the written document data against the hash value stored in the first storage section.

10. The information processing device of claim 8, wherein the execution section receives the written document data and the written document data identification information as the authenticity check request, and executes the authenticity check by comparing a hash value calculated from the written document data against the hash value stored in the first storage section, and by comparing the received written document data identification information against the written document data identification information stored in the first storage section.

11. The information processing device of claim 10, wherein the execution section compares the received hash value and the received written document data identification information against the hash value and the written document data identification information stored in the first storage section, and transmits the authenticity check inquiry result to the requesting party as a result selected from the group consisting of both the hash values and the written document data identification information matching, only the written document data identification information matching, only the hash values matching, and neither the hash values nor the written document data identification information matching.

12. The information processing device of any one of claim 7 to claim 11, wherein:
the first storage section and the second storage section are each configured by a blockchain database; and
the information processing device configures a blockchain together with a plurality of other computers connected over a network.

13. An information processing method in which a computer executes processing, the processing comprising:
executing an authenticity check of written document data in a case in which a request for an authenticity check of the written document data has been received from a requesting party, and transmitting an inquiry result from the authenticity check to the requesting party;
storing information regarding the requesting party and identification information for the written document data in association with each other in a first storage section in response to either the authenticity check request from the requesting party or transmission of the authenticity check inquiry result to the requesting party; and
notifying an issuing party of the written document data, as pre-stored in a second storage section, of information regarding the requesting party associated with the written document data identification information.

14. The information processing method of claim 13, wherein, in a case in which the issuing party has issued the written document data, a hash value calculated from the written document data and the written document data identification information are stored in association with each other in the first storage section.

15. The information processing method of claim 14, wherein the written document data is received as the authenticity check request, and the authenticity check is executed by comparing a hash value calculated from the written document data against the hash value stored in the first storage section.

16. The information processing method of claim 14, wherein the written document data and the written document data identification information are received as the authenticity check request, and the authenticity check is executed by comparing a hash value calculated from the written document data against the hash value stored in the first storage section, and by comparing the received written document data identification information against the written document data identification information stored in the first storage section.

17. The information processing method of claim 16, wherein the received hash value and the received written document data identification information are compared against the hash value and the written document data identification information stored in the first storage section, and the authenticity check inquiry result transmitted to the requesting party is a result selected from the group consisting of both the hash values and the written document data identification information matching, only the written document data identification information matching, only the hash values matching, and neither the hash values nor the written document data identification information matching.

18. The information processing method of any one of claim 13 to claim 17, wherein:
the first storage section and the second storage section are each configured by a blockchain database; and
the computer configures a blockchain together with a plurality of other computers connected over a network.

19. A storage medium stored with an information processing program executable by a computer to perform processing, the processing comprising:
executing an authenticity check of written document data in a case in which a request for an authenticity check of the written document data has been received from a requesting party, and transmitting an inquiry result from the authenticity check to the requesting party;
storing information regarding the requesting party and identification information for the written document data in association with each other in a first storage section in response to either the authenticity check request from the requesting party or transmission of the authenticity check inquiry result to the requesting party; and
notifying an issuing party of the written document data, as pre-stored in a second storage section, of information regarding the requesting party associated with the written document data identification information.
